## Europäisches Patentamt
## European Patent Office
## Office européen des brevets

(19)

(11) Veröffentlichungsnummer: **0 254 814**
**B1**

(12) **EUROPÄISCHE PATENTSCHRIFT**

(45) Veröffentlichungstag der Patentschrift:
**11.10.89**

(21) Anmeldenummer: **87105762.6**

(22) Anmeldetag: **18.04.87**

(51) Int. Cl.⁴: **G01B 21/00, G01D 11/24**

(54) **Gekapselte Messeinrichtung.**

(30) Priorität: **11.07.86  DE 3623353**

(43) Veröffentlichungstag der Anmeldung:
**03.02.88 Patentblatt 88/5**

(45) Bekanntmachung des Hinweises auf die Patenterteilung:
**11.10.89 Patentblatt 89/41**

(84) Benannte Vertragsstaaten:
**AT CH DE ES FR GB IT LI NL SE**

(56) Entgegenhaltungen:
**DE-C- 2 846 768**
**DE-C- 3 409 514**
**DE-C- 3 533 831**

(73) Patentinhaber: **DR. JOHANNES HEIDENHAIN GMBH,
Fraunhofer Strasse 2-4 Postfach 1260,
D-8225 Traunreut(DE)**

(72) Erfinder: **Miller, Walter, Dr., Adalbert-Stifter-Strasse 19,
D-8220 Traunstein(DE)**

ACTORUM AG

**Beschreibung**

Die Erfindung bezieht sich auf eine gekapselte Meßeinrichtung, insbesondere Längen- oder Winkelmeßeinrichtung gemäß dem Oberbegriff des Anspruches 1.

Bei gekapselten Meßeinrichtungen ist es erforderlich, im Gehäuse einen Längsschlitz vorzusehen, durch den ein Mitnehmer ins Innere des Gehäuses hineinragen kann, um die dort befindliche Baueinheit zum Abtasten der Meßteilung mit dem außerhalb des Gehäuses angebrachten Montagefuß zu verbinden. Bei Relativbewegungen von beispielsweise Bett und Schlitten einer Maschine wird die Maschinenbewegung auf die Meßteilung bzw. die Abtastbaueinheit übertragen, wobei der Mitnehmer innerhalb des Schlitzes in Bewegungsrichtung relativ verfahren und die Bewegung gemessen wird.

Zum Schutze der hochempfindlichen Meßteilung muß der Schlitz im Gehäuse möglichst gut verschlossen sein, und nur jeweils im Bereich des Mitnehmers soll eine Durchtrittmöglichkeit zum Inneren des Gehäuses gegeben sein.

Eine derartige Meßeinrichtung zeigt die DE-PS 28 46 768, bei der ein Maßstab und eine Abtasteinheit in einem Hohlkörper eingebracht sind, der einen in Meßrichtung durchgehenden Schlitz aufweist, der mittels dachförmig angeordneter Dichtelemente in Form von Kunststoff- oder Gummilippen verschlossen ist, durch die ein Mitnehmer hindurchgreift, um die Abtasteinheit mit einem zu messenden Objekt zu verbinden.

Ferner ist aus der DE-PS 34 09 514 eine gekapselte Meßeinrichtung bekannt, bei der durch die labyrinthartige Profilierung des Querschnittes der Dichtelemente ein besonders guter Schutz gegen Medien erzielt wird, die gesprüht oder gespritzt angewendet werden. Durch die angepaßte Formgebung des Mitnehmers bleibt dieser Effekt auch beim örtlichen Durchgriff des Mitnehmers durch die Dichtelemente erhalten.

Der Erfindung liegt die Aufgabe zugrunde, bei Meßeinrichtungen der vorgenannten Art die Abdichtung des Gehäuselängsschlitzes noch weiter zu verbessern.

Diese Aufgabe wird durch die im kennzeichnenden Teil des Anspruches 1 angegebenen Merkmale gelöst.

Die Vorteile der erfindungsgemäß abgedichteten Meßeinrichtung liegen darin, daß aufgrund der nach Art einer Verzahnung ineinandergreifenden Zinken der kammartigen Abdeckelemente Fremdkörper und Flüssigkeiten aber auch Sprühnebel und dergleichen nicht durch das Labyrinth nach innen in den Hohlraum der Meßeinrichtung eindringen können.

Mit Hilfe der Zeichnungen soll anhand eines Ausführungsbeispieles die Erfindung noch näher erläutert werden.

Es zeigt

Figur 1 einen schematischen Querschnitt durch eine Längenmeßeinrichtung und

Figur 2 einen schematischen Querschnitt durch die Längenmeßeinrichtung gemäß Figur 1 in der Ebene des Mitnehmers.

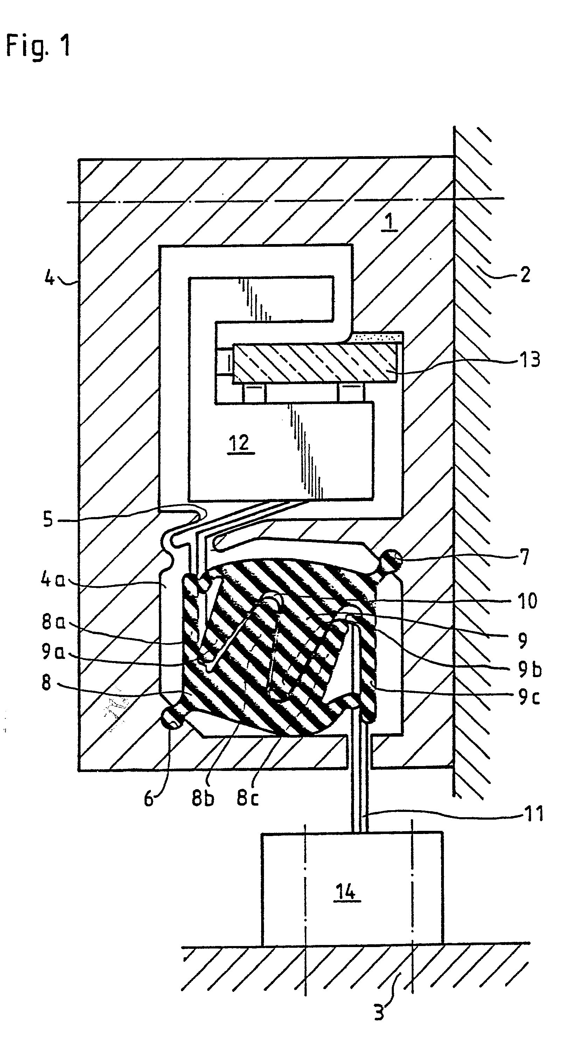

Eine in Figur 1 geschnitten dargestellte Längenmeßeinrichtung 1 ist am Schlitten 2 einer nicht näher bezeichneten Werkzeugmaschine befestigt. Der Schlitten 2 ist in bekannter und daher hier nicht gezeigter Weise am Bett 3 der Maschine geführt. Die Meßeinrichtung 1 soll hier nur mit den wesentlichsten Elementen gezeigt werden und besteht aus einem an den Stirnseiten verschlossenen Hohlprofil 4, das in Längsrichtung einen durchgehenden Schlitz 5 aufweist.

Der Schlitz 5 mündet in eine Vorkammer 4a, die Bestandteil des Hohlprofiles 4 ist.

In der Vorkammer 4a befinden sich zwei Ausnehmungen 6 und 7, die sich gegenüberliegen und parallel zum Schlitz 5 verlaufen. In den Ausnehmungen 6 und 7 sind Abdeckelemente 8 und 9 eingezogen, die sich über die gesamte Länge der Meßeinrichtung erstrecken.

Die Abdeckelemente 8 und 9 bestehen aus einem Werkstoff mit hoher Eigenelastizität. Die Formgebung und die Montage der Abdeckelemente 8 und 9 ist so gewählt, daß sie sich im Bereich ihrer freien Enden ineinanderschmiegen, wobei das Profil des Querschnittes der Abdeckelemente 8 und 9 kammförmig gestaltet ist, so daß im Bereich der abdichtenden Berührung ein Labyrinth 10 gebildet wird. Neben der abdichtenden Wirkung durch die gegenseitige Berührung der Abdeckelemente 8 und 9 wird das Eindringen von schädlichen Medien ins Innere der Meßeinrichtung 1 durch das Labyrinth 10 und die Vorkammer 4a noch erschwert.

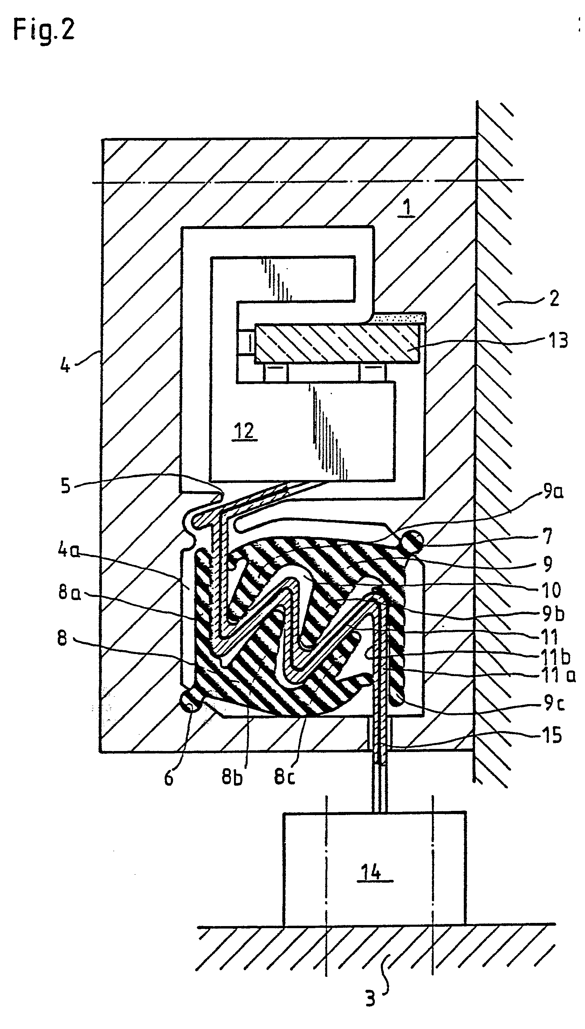

Figur 2 zeigt dieselbe Meßeinrichtung an einer anderen Stelle geschnitten. Am Ort des Schnittes durchdringt ein sogenannter Mitnehmer 11 das Labyrinth 10, das durch die Abdeckelemente 8 und 9 gebildet wird und an dessen Verlauf die Form des Mitnehmers 11 angepaßt ist. Der Mitnehmer 11 ist im Inneren der Meßeinrichtung 1 mit einem Abtastkopf 12 verbunden, mit dem die nicht gezeigte Teilung eines Maßstabes 13 abgetastet wird, der ebenfalls im Inneren der Meßeinrichtung 1 angeordnet ist. Der Maßstab 13 und der Abtastkopf 12 sind empfindliche optische bzw. elektronische Bauteile, die durch das Hohlprofil 4 gegen schädliche Umgebungseinflüsse geschützt werden sollen.

Durch den Mitnehmer 11 ist der Abtastkopf 12 mit einem Montagefuß 14 verbunden, der am Bett 3 der Maschine befestigt ist.

Verändern nun die Maschinen-Bauteile ihre Relativlage, d.h., wird der Schlitten 2 der Maschine gegenüber dem Maschinenbett 3 verfahren, so wird das Hohlprofil 4 in gleicher Weise verlagert und der Maßstab 13 bewegt sich am Abtastkopf 12 entlang. Dieser tastet dabei die Teilung des Maßstabes 13 ab und leitet daraus in bekannter Weise das Maß für den zurückgelegten Weg des Maschinenschlittens 2 ab, der in bekannter Weise numerisch angezeigt werden kann.

Durch den mäanderförmigen Querschnitt lassen sich einerseits Durchgangsbohrungen für elektrische Leitungen im Mitnehmer 11 herstellen, andererseits kann der Mitnehmer 11 zweischalig bzw. zweiteilig hergestellt werden. Dies ist im DE-GM 81 10 274 beschrieben. In besonders vorteilhafter Weise lassen sich bei einem derart zweischalig ausgeführten Mitnehmer 11 die elektrischen Verbindungen mit Hilfe einer an sich bekannten flexiblen gedruckten Schaltung 15 ausführen. Die zwei Hälften 11a und 11b des Mitnehmers 11 lassen sich nach dem Einlegen der flexiblen gedruckten Schaltung 15 in bekannter Weise miteinander verkleben, ultraschallverschweißen oder auf ähnliche Weise miteinander verbinden.

## Patentansprüche

1. Gekapselte Positionsmeßeinrichtung zur Messung der Lage zweier relativ zueinander beweglicher Objekte, insbesondere Längen- oder Winkelmeßeinrichtung, deren mit einem der zu messenden Objekte verbundenes Gehäuse an zumindest einer Seite einen in Bewegungsrichtung des beweglichen Objektes verlaufenden Schlitz aufweist, der mittels biegsamer, in Schlitzrichtung zweigeteilter, sich über dem Schlitz berührender Abdeckelemente abgedichtet ist, wobei die Abdeckelemente einen derart profilierten Querschnitt aufweisen, daß im Bereich der abdichtenden Berührung eine Art Labyrinth gebildet wird, durch das ein mit dem anderen Objekt verbundener Mitnehmer örtlich hindurchgreift, der seinerseits mit einer im Gehäuse untergebrachten, zur Messung dienenden Baueinheit verbunden und der Form des Labyrinthes angepaßt ist, dadurch gekennzeichnet, daß das Labyrinth (10) durch im Querschnitt jeweils kammartig ausgebildete Abdeckelemente (8, 9) gebildet wird, deren Zinken (8a, b, c; 9a, b, c) nach Art einer Verzahnung ineinander greifen und daß der das Labyrinth (10) durchgreifende Mitnehmer (11) quer zur Bewegungsrichtung einen der Verzahnung entsprechend mäanderförmigen Querschnitt aufweist.

2. Meßeinrichtung nach Anspruch 1, dadurch gekennzeichnet, daß das als Hohlprofil (4) ausgebildete Gehäuse eine Vorkammer (4a) zur Aufnahme der Abdeckelemente (8; 9) aufweist.

3. Meßeinrichtung nach Anspruch 1, dadurch gekennzeichnet, daß der Mitnehmer (11) aus zwei Teilen (11a, 11b) besteht, die zwischen sich eine flexible gedruckte Schaltung (15) einschließen.

4. Meßeinrichtung nach Anspruch 1, dadurch gekennzeichnet, daß die Abdeckelemente (8, 9) aus einem Material mit hoher Eigenelastizität hergestellt sind.

5. Meßeinrichtung nach Anspruch 1, dadurch gekennzeichnet, daß die Abdeckelemente (8, 9) aus einem Material mit geringer Eigenelastizität hergestellt sind, und daß sie unter Vorspannung montiert sind.

## Claims

1. Encapsulated position measuring device for measuring the position of two objects movable relative to one another, especially length or angle measuring device, of which a housing connected to one of the objects to be measured has a slot on at least one side running in the direction of movement of the movable object, which is sealed by means of yielding closure elements in two parts in the slot direction, contacting over the slot, wherein the closure elements have a profiled cross-section such that, in the region of the sealing contact, a kind of labyrinth is formed, through which there passes locally a carrier connected to the other object, and which for its part is connected to a measuring unit fitted in the housing and is adapted to the form of the labyrinth, characterized in that the labyrinth (10) is formed by closure elements (8, 9) formed comb-like in cross-section, whose projections (8a, b, c; 9a, b, c) engage in each other like gear teeth, and in that the carrier (11) passing through the labyrinth (10) has a meandering cross-section transverse to the direction of movement, corresponding to the toothing.

2. Measuring device according to claim 1, characterized in that the housing formed as a hollow profile (4) has a front chamber (4a) to receive the closure elements (8, 9).

3. Measuring device according to claim 1, characterized in that the carrier (11) consists of two parts (11a, 11b), which enclose therebetween a flexible printed circuit (15).

4. Measuring device according to claim 1, characterized in that the closure elements (8, 9) are made from a material with a high inherent elasticity.

5. Measuring device according to claim 1, characterized in that the closure elements (8, 9) are made from a material with a low inherent elasticity and in that they are mounted under pre-tension.

## Revendications

1. Dispositif de mesure de position mis en boîtier pour mesurer la position de deux objets se. déplaçant l'un par rapport à l'autre, en particulier dispositif de mesure de longueurs ou d'angles, dont le boîtier lié à l'un des objets à mesurer présente sur au moins une face une fente s'étendant dans le sens du déplacement de l'objet mobile, fente qui est isolée de manière étanche au moyen d'éléments de recouvrement flexibles, divisés en deux dans le sens de la fente, se touchant au-dessus de la fente, les éléments de recouvrement présentant une section transversale profilée de façon qu'un genre de labyrinthe soit formé dans la zone du contact isolant de manière étanche, labyrinthe à travers lequel passe localement un élément d'entraînement relié à l'autre objet, ledit élément d'entraînement étant de son côté relié à un élément de construction logé dans le boîtier et servant à la mesure et étant adapté à la forme du labyrinthe, caractérisé en ce que le labyrinthe (10) est formé par des éléments de recouvrement (8, 9) chaque fois réalisés avec une section transversale en forme de peigne, dont les dents (8a, b, c; 9a, b, c) sont en prise les unes dans les autres à la manière d'une denture et en ce que l'élément d'entraînement (11) traversant le labyrinthe (10) présente, transversalement au sens du déplacement, une section transversale en forme de méandres correspondant à la denture.

2. Dispositif de mesure selon la revendication 1, caractérisé en ce que le boîtier réalisé en forme de profilé creux (4) présente une antichambre (4a) pour recevoir les éléments de recouvrement (8, 9).

3. Dispositif de mesure selon la revendication 1, caractérisé en ce que l'élément d'entraînement (11) se compose de deux parties (11a, 11b) enfermant entre-elles un circuit imprimé (15) flexible.

4. Dispositif de mesure selon la revendication 1, caractérisé en ce que les éléments de recouvrement (8, 9) sont fabriqués en une matière à élasticité propre élevée.

5. Dispositif de mesure selon la revendication 1, caractérisé en ce que les éléments de recouvrement (8, 9) sont fabriqués en une matière à élasticité propre faible et en ce qu'ils sont montés sous précontrainte.

EP 0 254 814 B1

Fig. 1

Fig.2